# EUROPÄISCHE PATENTSCHRIFT

(11) **EP 3 114 052 B1**
(45) Veröffentlichungstag und Bekanntmachung des Hinweises auf die Patenterteilung: **28.11.2018**
(21) Anmeldenummer: 15707903.9
(22) Anmeldetag: 25.02.2015
(51) Int. Cl.: B65G 25/02

(54) **TRANSPORTVORRICHTUNG FÜR EIN TRANSPORTGUT**
TRANSPORT DEVICE FOR GOODS TO BE TRANSPORTED
DISPOSITIF DE TRANSPORT D'UNE MARCHANDISE À TRANSPORTER

(30) Priorität: 05.03.2014 DE 102014204045
(43) Veröffentlichungstag der Anmeldung: 11.01.2017
(73) Patentinhaber: Optima consumer GmbH, 74523 Schwäbisch Hall (DE)
(72) Erfinder: POLIFKE, Werner, 74523 Schwäbisch Hall (DE); LOBER, Klaus, 74564 Crailsheim (DE); KÜBLER, Oliver, 74535 Mainhardt (DE)
(74) Vertreter: Patentanwälte Ruff, Wilhelm, Beier, Dauster & Partner mbB
(86) Internationale Anmeldenummer: PCT/EP2015/053959
(87) Internationale Veröffentlichungsnummer: WO 2015/132108

(56) Entgegenhaltungen:
- BE-A3- 1 015 963
- JP-A- H07 115 294
- JP-U- S57 514
- JP-U- S5 382 193
- US-A1- 2012 222 941

## Beschreibung

Die Erfindung betrifft eine Transportvorrichtung für ein Transportgut umfassend einen Transportrechen mit mindestens einem Aufnahmebereich für das Transportgut und eine entlang einer Transportebene in eine Transportrichtung längsverschieblich angeordnete Schlittenanordnung, wobei an der Schlittenanordnung mindestens ein um eine im Wesentlichen senkrecht zu der Transportebene ausgerichtete Rotationsachse verschwenkbarer Hebel vorgesehen ist und wobei der Transportrechen an der Schlittenanordnung mittels des mindestens einen Hebels gelagert ist. Die Erfindung betrifft weiter eine Anlage und ein Verfahren zum Betreiben einer Transportvorrichtung für ein Transportgut.
Transportvorrichtungen sind in Anlagen eingesetzt, um Transportgüter, insbesondere Flaschen, Dosen und andere Behälter, zu einer Station, beispielsweise einer Verpackungs-, Verschließ-, Verschweiß-, Abfüll-, Montage- und/oder Bearbeitungsstation oder dergleichen, zu transportieren und/oder von dieser abzutransportieren. Dabei sind sogenannte Transportrechen bekannt, welche einen Aufnahmebereich für das Transportgut aufweisen. Mittels eines Transportrechen wird das Transportgut getaktet oder - insbesondere bei Verwendung mehrere zusammenwirkender Transportrechen - quasi kontinuierlich gefördert.
Eine Bewegung des Transportrechens in Richtung auf das Transportgut und weg von dem Transportgut wird im Zusammenhang mit der Anmeldung als Eintauchbewegung bezeichnet. Transportvorrichtungen sind beispielsweise aus BE 1 015 963 A3, JP S53 82193 U, JP S57-514 U, US 2012/222941 A1 und JP H07-115294 A bekannt.
Es ist bekannt, für eine Eintauchbewegung den Transportrechen um eine parallel zu der Transportrichtung verlaufende Achse zu verschwenken.

Aus BE 1 015 963 A3 ist eine Transportvorrichtung nach dem Oberbegriff des Anspruchs 1 mit zwei einander zugewandten Transportrechen bekannt, wobei die Transportrechen an einer Schlittenanordnung mittels zwei in Längsrichtung beabstandeter Hebelmechanismen gelagert sind. Die Schlittenanordnung ist mittels einer stationären Kolben-Zylinder-Antriebsanordnung in Längsrichtung verschieblich. Auf der Schlittenanordnung sind eine zweite Antriebsanordnung und eine dritte Antriebsvorrichtung vorgesehen, welche den zwei Hebelmechanismen zugeordnet sind, wobei mittels der zweiten und der dritten Antriebsvorrichtung die zwei Transportrechen aufeinander zu oder voneinander weg bewegbar sind.
Aus der US 3,939,992 ist eine Transportvorrichtung für ein Werkstück mit zwei zusammenwirkenden Transportrechen bekannt, wobei ein Transportgut zwischen zwei Aufnahmebereichen der Transportrechen aufgenommen wird. Jeder Transportrechen ist an einer zugehörigen Schlittenanordnung in Eintauchrichtung verschieblich gelagert. An den Schlittenanordnungen sind jeweils zwei zweiarmige Hebel verschwenkbar gelagert, wobei jeweils ein erster Arm des Hebels mit dem Transportrechen und ein zweiter Arm des Hebels mit einer Stelleinrichtung gekoppelt ist. Bei Aufbringen einer Verstellkraft mittels der Stelleinrichtung auf die Hebel werden diese verschwenkt, wodurch der Transportrechen eine Eintauchbewegung durchführt bis die Werkstücke zwischen den Transportrechen geklemmt sind. Wird nach dem Klemmen der Werkstücke eine weitere Verstellkraft aufgebracht, so führt diese zu einer Bewegung der Schlittenanordnung in Transportrichtung. Ebenso werden beim Aufbringen einer Verstellkraft in eine entgegengesetzte Richtung zunächst die Hebel für eine Freigabe der Werkstücke verschwenkt und anschließend die Schlittenanordnung verschoben. Die Transportvorrichtung ist auch wegen der Klemmung nicht für fragile Transportgüter geeignet. Üblicherweise ist eine Aufnahme mit einem zulässigen Spiel durch den Transportrechen, gegebenenfalls unter Formschluss, aber ohne Klemmung gefordert.
Es ist eine Aufgabe der Erfindung, eine Transportvorrichtung mit einem Transportrechen zu schaffen, welche für verschiedene Transportgüter geeignet ist und welche eine zuverlässige Bewegung des Transportrechens mit unterschiedlicher Eintauchtiefe erlaubt. Es sind weitere Aufgaben der Erfindung, ein Abfüllanlage mit einer Transportvorrichtung und ein Verfahren zum Betreiben einer Transportvorrichtung zu schaffen.
Diese Aufgaben werden gelöst durch die Gegenstände mit den Merkmalen der Ansprüche 1, 6 und 7. Weitere Vorteile der Erfindung ergeben sich aus den Unteransprüchen.

Gemäß einem ersten Aspekt der Erfindung wird entsprechend des Anspruchs 1 eine Transportvorrichtung für ein Transportgut umfassend einen Transportrechen mit mindestens einem Aufnahmebereich für das Transportgut, eine entlang einer Transportebene in eine Transportrichtung längsverschieblich angeordnete Schlittenanordnung und eine Antriebseinrichtung mit einer ersten stationär angeordneten Antriebseinheit und einer zweite stationär angeordneten Antriebseinheit geschaffen, wobei an der Schlittenanordnung mindestens ein um eine im Wesentlichen senkrecht zu der Transportebene ausgerichtete Rotationsachse verschwenkbarer Hebel vorgesehen ist, der Transportrechen an der Schlittenanordnung mittels des mindestens einen Hebels gelagert ist, die erste Antriebseinheit mittels eines in sich geschlossenen ersten Kraftübertragungsmittels mit der Schlittenanordnung antreibend verbunden ist und mittels der ersten Antriebseinheit eine Verschiebebewegung der Schlittenanordnung erzeugbar ist, und die zweite Antriebseinheit mittels eines in sich geschlossenen zweiten Kraftübertragungsmittels mit dem mindestens einen Hebel antreibend verbunden ist und mittels der zweiten Antriebseinheit eine Verschwenkbewegung des mindestens einen Hebels erzeugbar ist, sodass mittels einer koordinierten Ansteuerung der Antriebseinheiten wahlweise eine Verfahrbewegung der Schlittenanordnung und des Transportrechens in Transportrichtung und/oder eine Eintauchbewegung des Transportrechens senkrecht zu der Transportrichtung erzeugbar ist.

Dabei ist eine variable Eintauchtiefe realisierbar, welche von einem Schwenkwinkel des Hebels und einer Länge des Hebels abhängig ist. In jeder Eintauchtiefe ist der Transportrechen geeignet zu dem zu transportierenden Transportgut ausgerichtet.

Um bei einer Eintauchbewegung eine Verstellbewegung eines Hauptkörpers des Transportrechens ohne ein Verschenken zu gewährleisten, ist in einer Ausgestaltung eine Führung vorgesehen, welche ein Verschwenken verhindert. In vorteilhaften Ausgestaltungen ist der Transportrechen an der Schlittenanordnung mittels mindestens zwei beabstandeter und parallel zueinander angeordneter Hebel gelagert, Die Hebel weisen eine gleiche Wirklänge auf. Durch die Hebel und den Hauptkörper des Transportrechens wird dabei ein Viergelenk geschaffen. Mittels der zweiten Antriebseinrichtung werden in einer Ausgestaltung beide Hebel angetrieben. In anderen Ausgestaltungen wird nur ein Hebel angetrieben, wobei der zweite Hebel passiv mitbewegt wird.

Das erste und/oder das zweite Kraftübertragsungsmittel ist/sind beispielsweise als Antriebsseil, als Antriebsriemen, insbesondere als Flachriemen, Zahnriemen oder Keilriemen, oder als Kette gestaltet. Durch eine entsprechende Antriebseinheit sind an der bewegten Schlittenanordnung keine Elemente mit hoher Masse und/oder großem Bauraumbedarf notwendig. Das erste Kraftübertragungsmittel ist in einer Ausgestaltung mechanisch fest mit der Schlittenanordnung verbunden. Eine Führung des Kraftübertragungsmittels erfolgt mittels geeigneter Umlenkrollen.

Für einen Schwenkantrieb des Hebels ist dabei vorzugsweise an der Schlittenanordnung mindestens eine den mindestens einen Hebel antreibende Kraftabtriebsanordnung umfassend zwei Umlenkwalzen und eine zwischen den Umlenkwalzen angeordnete, mit dem mindestens einen Hebel wirkverbundene Kraftabtriebswalze vorgesehen.

Bei einer Gestaltung mit zwei geschlossenen Kraftübertragungsmitteln ist mittels einer Ansteuerung der Antriebseinheiten für eine synchrone Bewegung der Kraftübertragungsmittel, d.h. eine Bewegung in gleicher Richtung und mit gleicher Geschwindigkeit, eine Verfahrbewegung der Schlittenanordnung mit dem Transportrechen in Transportrichtung erzeugbar ist. Durch eine Relativbewegung der Kraftübertragungsmittel mit einem sich aufgrund der Abmessungen der Bauteile und/oder des Schwenkbereichs ergebenden Übersetzungsverhältnis ist eine Eintauchbewegung, insbesondere eine lineare Eintauchbewegung des Transportrechens senkrecht zu der Transportrichtung erzeugbar. Je nach Gestaltung der Kraftübertragungsmittel und/oder einer gewünschten Eintauchbewegung wird eine Relativbewegung durch eine absolute Bewegung beider Kraftübertragungsmittel in gleicher oder in entgegengesetzter Richtung oder eine Bewegung nur eines Kraftübertragungsmittels erzeugt. Die Antriebseinheiten werden dabei in einer Ausgestaltung in einem hierarchischen System (Master-Slave-System) betrieben, wobei die zweite Antriebseinheit auf die erste Antriebseinheit synchronisiert ist.
In bevorzugten Ausgestaltungen umfasst die Schlittenanordnung mindestens zwei Schlitten, wobei der Transportrechen an den Schlitten jeweils mittels eines schwenkbaren Hebels gelagert ist. Ein Abstand der Schlitten ist je nach Größe der Transportvorrichtung und/oder des Transportwegs durch den Fachmann geeignet festlegbar. In einer Ausgestaltung sind die Schlitten mittels einer Koppelstange verbunden. Dabei wird vorzugsweise nur ein Schlitten mittels der ersten Antriebseinheit angetrieben, wobei der zweite Schlitten durch den ersten Schlitten und die Koppelstange angetrieben wird. In anderen Ausgestaltungen sind beide Schlitten mittels der ersten Antriebseinheit angetrieben, beispielsweise fest mit dem Kraftübertragungsmittel verbunden. Dabei kann auf eine Koppelstange verzichtet werden.
In vorteilhaften Ausgestaltungen ist an den Schlitten jeweils eine den Hebel antreibende Kraftabtriebsanordnung umfassend zwei Umlenkwalzen und eine zwischen den Umlenkwalzen angeordnete, mit dem Hebel wirkverbundene Kraftabtriebswalze vorgesehen. Die den Schlitten zugeordneten Hebel werden dabei mittels eines gemeinsamen in sich geschlossenen zweiten Kraftübertragungsmittels angetrieben, sodass eine synchrone Bewegung sichergestellt ist. Gleichzeitig wird so durch eine geeignete Kinematik erreicht, dass ein Hauptkörper des Transportrechens bei einem Verschwenken des Hebels parallel zu einer Transportrichtung ausgerichtet verbleibt.

Gemäß einem zweiten Aspekt wird entsprechend des Anspruchs 6 eine Anlage umfassend eine Station, insbesondere eine Verpackungs-, Verschließ-, Verschweiß-, Abfüll-, Montage- und/oder Bearbeitungsstation geschaffen, welche mindestens eine Transportvorrichtung aufweist, um ein Produkt und/oder einen Behälter zu der Station zu transportieren und/oder von Station abzutransportieren. Das Produkt ist pastös, flüssig und/oder fest und vorzugsweise in einem geeigneten Behälter für den Transport angeordnet. In einer Ausgestaltung ist die Station als Abfüllstation gestaltet, wobei ein leerer oder nur teilweise befüllter Behälter mittels einer Transportvorrichtung zu der Station transportiert und nach Befüllen von der Station abtransportiert wird. Die Transportvorrichtung umfasst in einer Ausgestaltung einen oder mehrere in Reihe angeordnete Transportrechen, welche(r) mit einem dem oder den Transportrechen gegenüberliegenden Geländer zusammenwirkt. In anderen Ausgestaltungen sind einander gegenüberliegende Transportrechen vorgesehen, welche zusammen die Produkte und/oder die Behälter ergreifen.

Gemäß einem dritten Aspekt wird entsprechend des Anspruchs 7 ein Verfahren zum Betreiben einer Transportvorrichtung für ein Transportgut geschaffen, wobei die Transportvorrichtung einen Transportrechen mit mindestens einem Aufnahmebereich für das Transportgut, eine entlang einer Transportebene in eine Transportrichtung längsverschieblich angeordnete Schlittenanordnung, und eine Antriebseinrichtung mit einer ersten stationär angeordneten Antriebseinheit und einer zweiten stationär angeordneten Antriebseinheit umfasst, wobei an der Schlittenanordnung mindestens ein um eine im Wesentlichen senkrecht zu der Transportebene ausgerichtete Rotationsachse verschwenkbarer Hebel vorgesehen ist, der Transportrechen an der Schlittenanordnung mittels des mindestens einen Hebels gelagert ist, die erste Antriebseinheit mittels eines in sich geschlossenen ersten Kraftübertragungsmittels mit der Schlittenanordnung antreibend verbunden ist und mittels der ersten Antriebseinheit eine Verschiebebewegung der Schlittenanordnung erzeugbar ist und die zweite Antriebseinheit mittels eines in sich geschlossenen zweiten Kraftübertragungsmittels mit dem mindestens einen Hebel antreibend verbunden ist und mittels der zweiten Antriebseinheit eine Verschwenkbewegung des mindestens einen Hebels erzeugbar ist, wobei gemäß dem Verfahren eine wahlweise koordinierte Ansteuerung der ersten Antriebseinheit und der zweiten Antriebseinheit erfolgt, um eine Verfahrbewegung der Schlittenanordnung mit dem Transportrechen in Transportrichtung und/oder eine Eintauchbewegung des Transportrechens zu erzeugen.
Vorzugsweise wird mittels einer synchronen Ansteuerung der Antriebseinheiten eine Verfahrbewegung der Schlittenanordnung mit dem Transportrechen in Transportrichtung und mittels einer Ansteuerung der Antriebseinheiten mit einem definierbaren Übersetzungsverhältnis eine Eintauchbewegung des Transportrechens erzeugt.
Weitere Vorteile der Erfindung ergeben sich aus den Unteransprüchen und aus der nachfolgenden Beschreibung eines Ausführungsbeispiels der Erfindung, das in den Zeichnungen schematisch dargestellt ist. Für gleiche oder ähnliche Bauteile werden in den Zeichnungen einheitliche Bezugszeichen verwendet.

In den Zeichnungen zeigen:
- Fig. 1:: perspektivische Darstellung einer Transportvorrichtung;
- Fig. 2:: Draufsicht auf die Transportvorrichtung gemäß Fig. 1 und
- Fig. 3:: eine schematische geschnittene Draufsicht auf einen Schlitten der Transportvorrichtung gemäß Fig. 1.

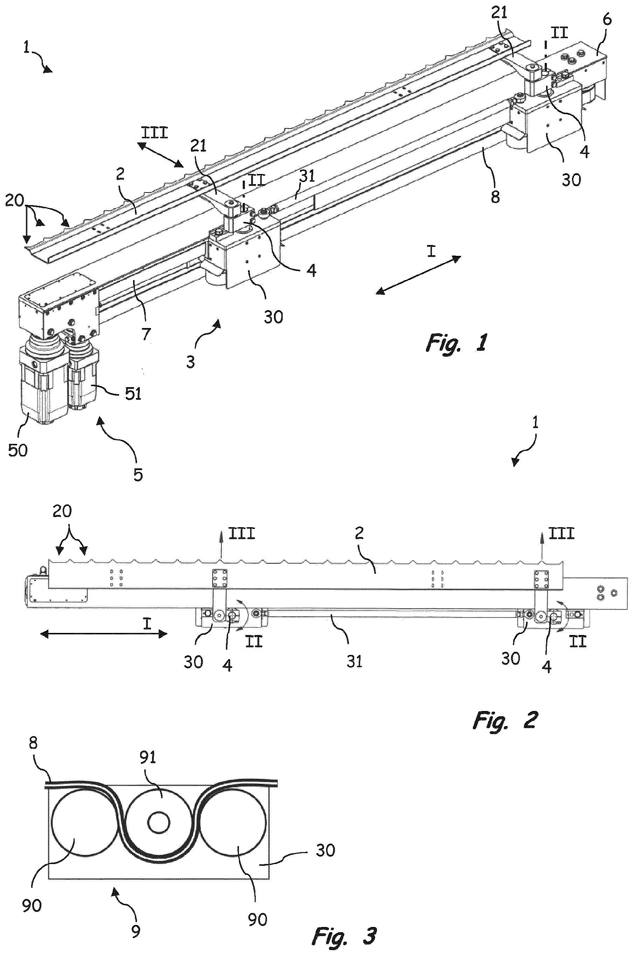

Fig. 1 und 2 zeigen schematisch in einer perspektivischen Darstellung bzw. einer Draufsicht eine Transportvorrichtung 1 für ein nicht dargestelltes Transportgut, insbesondere für Behälter, wie Dosen, Flaschen oder dergleichen.

Die Transportvorrichtung 1 umfasst einen Transportrechen 2 mit mehreren Aufnahmebereichen 20 für das Transportgut. Die Ausnehmungen 20 sind entsprechend einem zu transportierenden Gut geeignet geformt. Die dargestellte Form ist lediglich beispielhaft.

Weiter umfasst die Transportvorrichtung 1 eine entlang einer Transportebene in eine durch einen Doppelpfeil dargestellte Transportrichtung I längsverschieblich angeordnete Schlittenanordnung 3 mit zwei Schlitten 30, welche über eine Koppelstange 31 miteinander in Transportrichtung I starr gekoppelt sind.

Der Transportrechen 2 ist an der Schlittenanordnung 3, genauer an den zwei Schlitten 30 jeweils mittels eines Hebels 4 gelagert. Die Hebel 4 sind jeweils um eine im Wesentlichen senkrecht zu der Transportebene ausgerichtete Rotationsachse II verschwenkbar und gelenkig mit an dem Transportrechen 2 angeordneten Auslegern 21 verbunden. Die Ausleger 21 ragen senkrecht von einem Hauptkörper des Transportrechens 2 parallel zueinander ab. Durch die zwei Hebel 4 und den als Koppel wirkenden Hauptkörper des Transportrechens wird ein Viergelenk geschaffen, sodass der Hauptkörper des Transportrechens stets parallel zu der Transportrichtung I bei einem Verschwenken der Hebel 4 verbleibt.

Für eine Bewegung der Schlittenanordnung 3 und ein Verschwenken der Hebel 4 ist eine Antriebseinrichtung 5 umfassend eine erste Antriebseinheit 50 und eine zweite Antriebseinheit 51 vorgesehen. Die Antriebseinheiten 50, 51 sind jeweils als elektrische Antriebsmotoren gestaltet, welche stationär an einem Rahmen 6 angebracht sind.

Die erste Antriebseinheit 50 ist mittels eines als Antriebsriemen gestalteten, in sich geschlossenen ersten Kraftübertragungsmittels 7 mit der Schlittenanordnung 3, genauer mit einem der Schlitten 30 antreibend verbunden ist. Der Schlitten 30 ist dabei fest mit dem Antriebsriemen gekoppelt. Die Bewegung des ersten Schlittens 30 wird mittels der Koppelstange 31 auf den zweiten Schlitten 30 übertragen. Der Antriebsriemen ist über nicht dargestellte geeignete Umlenkrollen geführt. Mittels der ersten Antriebseinheit 50 ist eine Verschiebebewegung der Schlittenanordnung 3 erzeugbar.

Ein Antrieb der Hebel 4 für eine Verschwenkbewegung erfolgt mittels der zweiten Antriebseinheit 51 und eines als Antriebsriemen gestalteten, in sich geschlossenen zweiten Kraftübertragungsmittels 8.

Fig. 3 zeigt schematisch eine geschnittene Draufsicht auf einen Schlitten 30 der Transportvorrichtung 1 gemäß Fig. 1. Wie in Fig. 3 erkennbar, ist an den Schlitten 30 jeweils eine den in Fig. 3 nicht dargestellten Hebel 4 antreibende Kraftabtriebsanordnung 9 umfassend zwei Umlenkwalzen 90 und eine zwischen den Umlenkwalzen 90 angeordnete Kraftabtriebswalze 91 vorgesehen. Die Kraftabtriebswalze 91 ist mit dem Hebel 4 (vgl. Fig. 1) des Schlittens 30 wirkverbunden. Die Kraftabtriebswalze 91 ist mittels des als Antriebsriemen gestalteten, in sich geschlossenen zweiten Kraftübertragungsmittels 8 mit der zweiten Antriebseinheit 51 (vgl. Fig. 1) verbunden. Mittels der zweiten Antriebseinheit 51 ist somit die Kraftabtriebswalze 91 antreibbar und eine Verschwenkbewegung der Hebels 4 erzeugbar.

Durch eine koordinierte Ansteuerung der Antriebseinheiten 50, 51 ist wahlweise eine Verfahrbewegung der Schlittenanordnung 3 und des Transportrechens 2 in Transportrichtung I oder eine Eintauchbewegung des Transportrechens 2, insbesondere eine lineare Eintauchbewegung des Transportrechens 2 in eine Eintauchrichtung III senkrecht zu der Transportrichtung I erzeugbar.

Die Antriebseinheiten 51, 52 und die Kraftübertragungsmittel 7, 8 sind dabei derart gewählt, dass für eine Verfahrbewegung der Schlittenanordnung 3 und des Transportrechens 2 in Transportrichtung I beide Kraftübertragungsmittel 7, 8 synchron, d.h. mit gleicher Geschwindigkeit und in gleiche Richtung bewegt werden. Für eine Verschwenkbewegung des Transportrechens 2 werden die Antriebseinheiten 51, 52 derart betrieben, dass die Kraftübertragungsmittel 7, 9 eine Relativbewegung ausführen. In einer Ausgestaltung steht für eine Relativbewegung ein Kraftübertragungsmittel 7, 9 still. Insbesondere eine lineare Eintauchbewegung in die Eintauchrichtung III ist dabei möglich, indem die Kraftübertragungsmittel 7, 9 in gleicher Richtung, jedoch mit einem von der Länge des Hebels 4 und dem Durchmesser der Kraftabtriebswalze 91 abhängigen Übersetzungsverhältnis bewegt werden. Die genaue Einstellung ist durch den Fachmann geeignet durchführbar.

## Patentansprüche

1. Transportvorrichtung für ein Transportgut umfassend
- einen Transportrechen (2) mit mindestens einem Aufnahmebereich (20) für das Transportgut und
- eine entlang einer Transportebene in eine Transportrichtung (I) längsverschieblich angeordnete Schlittenanordnung (3), und
- eine Antriebseinrichtung (5) umfassend eine erste Antriebseinheit (50) und eine zweite Antriebseinheit (51)
wobei an der Schlittenanordnung (3) mindestens ein um eine im Wesentlichen senkrecht zu der Transportebene ausgerichtete Rotationsachse (II) verschwenkbarer Hebel (4) vorgesehen ist,
wobei der Transportrechen (2) an der Schlittenanordnung (3) mittels des mindestens einen Hebels (4) gelagert ist,
wobei mittels der ersten Antriebseinheit (50) eine Verschiebebewegung der Schlittenanordnung (3) erzeugbar ist, und mittels der zweiten Antriebseinheit (51) eine Verschwenkbewegung des mindestens einen Hebels (4) erzeugbar ist, sodass mittels einer koordinierten Ansteuerung der Antriebseinheiten (50,51) wahlweise eine Verfahrbewegung der Schlittenanordnung (3) und des Transportrechens (2) in Transportrichtung (I) und/oder eine Eintauchbewegung des Transportrechens (2) senkrecht zu der Transportrichtung (I) erzeugbar ist, und
wobei die erste Antriebseinheit (50) stationär angeordnet ist,
**dadurch gekennzeichnet, dass**
die erste Antriebseinheit (50) mittels eines in sich geschlossenen ersten Kraftübertragungsmittels (7) mit der Schlittenanordnung (3) antreibend verbunden ist, die zweite Antriebseinheit (51) stationär angeordnet ist und mittels eines in sich geschlossenen zweiten Kraftübertragungsmittels (8) mit dem mindestens einen Hebel (4) antreibend verbunden ist.

2. Transportvorrichtung nach Anspruch 1, **dadurch gekennzeichnet, dass** der Transportrechen (2) an der Schlittenanordnung (3) mittels mindestens zwei beabstandeter und parallel zueinander angeordneter Hebel (4) gelagert ist.

3. Transportvorrichtung nach Anspruch 1 oder 2, **dadurch gekennzeichnet, dass** an der Schlittenanordnung (3) mindestens eine den mindestens einen Hebel (4) antreibende Kraftabtriebsanordnung (9) umfassend zwei Umlenkwalzen (90) und eine zwischen den Umlenkwalzen (90) angeordnete, mit dem mindestens einen Hebel (4) wirkverbundene Kraftabtriebswalze (91) vorgesehen ist.

4. Transportvorrichtung nach einem der Ansprüche 1 bis 3, **dadurch gekennzeichnet, dass** die Schlittenanordnung (3) mindestens zwei Schlitten (30) umfasst, wobei der Transportrechen (2) an den Schlitten (30) jeweils mittels eines schwenkbaren Hebels gelagert ist, und wobei die Schlitten vorzugsweise mittels einer Koppelstange verbunden sind.

5. Transportvorrichtung nach einem der Ansprüche 1 bis 4, **dadurch gekennzeichnet, dass** das in sich geschlossenen erste Kraftübertragungsmittel (7) und/oder das in sich geschlossenen zweite Kraftübertragungsmittel (8) als Antriebsriemen, Antriebskette oder Antriebsseilzug gestaltet ist.

6. Anlage umfassend eine Station, insbesondere eine Verpackungs-, Verschließ-, Verschweiß-, Abfüll-, Montage- und/oder Bearbeitungsstation und mindestens eine Transportvorrichtung (1) nach einem der Ansprüche 1 bis 5, um ein Produkt und/oder einen Behälter zu der Station zu transportieren und/oder von Station abzutransportieren.

7. Verfahren zum Betreiben einer Transportvorrichtung (1) für ein Transportgut, wobei die Transportvorrichtung (1) einen Transportrechen (2) mit mindestens einem Aufnahmebereich (20) für das Transportgut, eine entlang einer Transportebene in eine Transportrichtung (I) längsverschieblich angeordnete Schlittenanordnung (3), und eine Antriebseinrichtung (5) mit einer ersten stationär angeordneten Antriebseinheit (50) und einer zweiten stationär angeordneten Antriebseinheit (51) umfasst, wobei an der Schlittenanordnung (3) mindestens ein um eine im Wesentlichen senkrecht zu der Transportebene ausgerichtete Rotationsachse (II) verschwenkbarer Hebel (4) vorgesehen ist, der Transportrechen (2) an der Schlittenanordnung (3) mittels des mindestens einen Hebels (4) gelagert ist, die erste Antriebseinheit (50) mittels eines in sich geschlossenen ersten Kraftübertragungsmittels (7) mit der Schlittenanordnung (3) antreibend verbunden ist und mittels der ersten Antriebseinheit (50) eine Verschiebebewegung der Schlittenanordnung (3) erzeugbar ist, und die zweite Antriebseinheit (51) mittels eines in sich geschlossenen zweiten Kraftübertragungsmittels (8) mit dem mindestens einen Hebel (4) antreibend verbunden ist und mittels der zweiten Antriebseinheit (51) eine Verschwenkbewegung des mindestens einen Hebels (4) erzeugbar ist,
das Verfahren umfassend
eine wahlweise koordinierte Ansteuerung der ersten Antriebseinheit (50) und der zweiten Antriebseinheit (51), um eine Verfahrbewegung der Schlittenanordnung (3) mit dem Transportrechen (2) in Transportrichtung und/oder eine Eintauchbewegung des Transportrechens zu erzeugen.

8. Verfahren nach Anspruch 7, **dadurch gekennzeichnet, dass** mittels einer synchronen Ansteuerung der Antriebseinheiten (50, 51) eine Verfahrbewegung der Schlittenanordnung (3) mit dem Transportrechen (2) in Transportrichtung (I) erzeugt wird und mittels einer Ansteuerung der Antriebseinheiten (50, 51) mit einem definierbaren Übersetzungsverhältnis eine Eintauchbewegung des Transportrechens (2) erzeugt wird.

## Claims

1. Transport device for goods to be transported, comprising
- a transport rake (2) with at least one receiving region (20) for the goods to be transported, and
- a slide arrangement (3) which is arranged so as to be longitudinally displaceable along a transport plane in a transport direction (I), and
- a drive device (5) comprising a first drive unit (50) and a second drive unit (51),
wherein at least one lever (4) which is pivotable about a rotation axis (II) oriented substantially perpendicularly to the transport plane is provided on the slide arrangement (3),
wherein the transport rake (2) is mounted on the slide arrangement (3) by means of the at least one lever (4),
wherein a displacement movement of the slide arrangement (3) can be caused by means of the first drive unit (50), and a pivoting movement of the at least one lever (4) can be caused by means of the second drive unit (51) such that, by means of a coordinated activation of the drive units (50, 51), a travel movement of the slide arrangement (3) and of the transport rake (2) in the transport direction (I) and/or a plunging movement of the transport rake (2) perpendicularly to the transport direction (I) can be selectively caused, and
wherein the first drive unit (50) is arranged in a stationary manner,
**characterized in that**
the first drive unit (50) is connected in a driving manner to the slide arrangement (3) by means of a closed-loop first force transmission means (7), the second drive unit (51) is arranged in a stationary manner and is connected in a driving manner to the at least one lever (4) by means of a closed-loop second force transmission means (8).

2. Transport device according to claim 1, **characterized in that** the transport rake (2) is mounted on the slide arrangement (3) by means of at least two levers (4) which are spaced apart and are arranged parallel to each other.

3. Transport device according to claim 1 or 2, **characterized in that** at least one force output arrangement (9) which drives the at least one lever (4) and comprises two deflecting rollers (90) and a force output roller (91), which is arranged between the deflecting rollers (90) and is operatively connected to the at least one lever (4), is provided on the slide arrangement (3).

4. Transport device according to any of claims 1 to 3, **characterized in that** the slide arrangement (3) comprises at least two slides (30), wherein the transport rake (2) is in each case mounted on the slides (30) by means of a pivotable lever, and wherein the slides are connected preferably by means of a coupling rod.

5. Transport device according to any of claims 1 to 4, **characterized in that** the closed-loop first force transmission means (7) and/or the closed-loop second force transmission means (8) are/is designed as a drive belt, drive chain or drive cable pull.

6. Machine comprising a station, in particular a packaging, sealing, welding, filling, assembling and/or processing station and at least one transport device (1) according to one of claims 1 to 5, in order to transport a product and/or a container to the station and/or to transport same away from the station.

7. Method for operating a transport device (1) for goods to be transported, wherein the transport device (1) comprises a transport rake (2) with at least one receiving region (20) for the goods to be transported, a slide arrangement (3) which is arranged so as to be longitudinally displaceable along a transport plane in a transport direction (I), and a drive device (5) with a first drive unit (50) which is arranged in a stationary manner, and a second drive unit (51) which is arranged in a stationary manner, wherein at least one lever (4) which is pivotable about a rotation axis (II) oriented substantially perpendicularly to the transport plane is provided on the slide arrangement (3), the transport rake (2) is mounted on the slide arrangement (3) by means of the at least one lever (4), the first drive unit (50) is connected in a driving manner to the slide arrangement (3) by means of a closed-loop first force transmission means (7) and by means of the first drive unit (50) a displacement movement of the slide arrangement (3) can be caused, and the second drive unit (51) is connected in a driving manner to the at least one lever (4) by means of a closed-loop second force transmission means (8) and by means of the second drive unit (51) a pivoting movement of the at least one lever (4) can be caused,
the method comprising
an optionally coordinated activation of the first drive unit (50) and the second drive unit (51), in order to cause a travel movement of the slide arrangement (3) with the transport rake (2) in the transport direction and/or a plunging movement of the transport rake.

8. Method according to claim 7, **characterized in that** a travel movement of the slide arrangement (3) with the transport rake (2) in the transport direction (I) is caused by means of a synchronous activation of the drive units (50, 51), and a plunging movement of the transport rake (2) is caused by means of an activation of the drive units (50, 51) with a definable transmission ratio.

## Revendications

1. Dispositif de transport d'une marchandise à transporter, comportant
- un râteau de transport (2) comprenant au moins une région de réception (20) pour la marchandise à transporter et
- un ensemble de chariots (3) disposé de manière coulissante longitudinalement le long d'un plan de transport dans une direction de transport (I), et
- un dispositif d'entraînement (5) comportant une première unité d'entraînement (50) et une deuxième unité d'entraînement (51),
au moins un levier (4) pouvant pivoter autour d'un axe de rotation (II) orienté sensiblement perpendiculairement au plan de transport étant prévu sur l'ensemble de chariots (3),
le râteau de transport (2) étant monté sur l'ensemble de chariots (3) au moyen dudit au moins un levier (4),
un mouvement de coulissement de l'ensemble de chariots (3) pouvant être produit au moyen de la première unité d'entraînement (50), et un mouvement de pivotement dudit au moins un levier (4) pouvant être produit au moyen de la deuxième unité d'entraînement (51), de telle sorte qu'au moyen d'une commande coordonnée des unités d'entraînement (50, 51), un mouvement de déplacement de l'ensemble de chariots (3) et du râteau de transport (2) dans la direction de transport (I) et/ou un mouvement de plongée du râteau de transport (2) perpendiculairement à la direction de transport (I) puissent être produits sélectivement, et
la première unité d'entraînement (50) étant disposée de manière fixe,
**caractérisé en ce que**
la première unité d'entraînement (50) est reliée par entraînement à l'ensemble de chariots (3) au moyen d'un premier moyen de transmission de force (7) fermé sur lui-même, la deuxième unité d'entraînement (51) est disposée de manière fixe et est reliée par entraînement audit au moins un levier (4) au moyen d'un deuxième moyen de transmission de force (8) fermé sur lui-même.

2. Dispositif de transport selon la revendication 1, **caractérisé en ce que** le râteau de transport (2) est monté sur l'ensemble de chariots (3) au moyen d'au moins deux leviers (4) espacés et disposés parallèlement les uns aux autres.

3. Dispositif de transport selon la revendication 1 ou 2, **caractérisé en ce qu'**au moins un ensemble de prise de force (9) entraînant ledit au moins un levier (4) et comportant deux rouleaux de renvoi (90) et un rouleau de prise de force (91) disposé entre les rouleaux de renvoi (90) et relié fonctionnellement audit au moins un levier (4) est prévu sur l'ensemble de chariots (3).

4. Dispositif de transport selon l'une quelconque des revendications 1 à 3, **caractérisé en ce que** l'ensemble de chariots (3) comprend au moins deux chariots (30), le râteau de transport (2) étant monté sur les chariots (30) respectivement au moyen d'un levier pivotant, et les chariots étant reliés de préférence au moyen d'une tige d'accouplement.

5. Dispositif de transport selon l'une quelconque des revendications 1 à 4, **caractérisé en ce que** le premier moyen de transmission de force (7) fermé sur lui-même et/ou le deuxième moyen de transmission de force (8) fermé sur lui-même sont conçus sous forme de courroie d'entraînement, de chaîne d'entraînement ou de câble de commande d'entraînement.

6. Installation comportant un poste, en particulier un poste d'emballage, de fermeture, de soudage, de remplissage, de montage et/ou d'usinage et au moins un dispositif de transport (1) selon l'une quelconque des revendications 1 à 5, afin de transporter un produit et/ou un contenant jusqu'au poste et/ou de l'enlever du poste.

7. Procédé permettant de faire fonctionner un dispositif de transport (1) d'une marchandise à transporter, le dispositif de transport (1) comportant un râteau de transport (2) comprenant au moins une région de réception (20) pour la marchandise à transporter, un ensemble de chariots (3) disposé de manière coulissante longitudinalement le long d'un plan de transport dans une direction de transport (I), et un dispositif d'entraînement (5) comportant une première unité d'entraînement (50) disposée de manière fixe et une deuxième unité d'entraînement (51) disposée de manière fixe, au moins un levier (4) pouvant pivoter autour d'un axe de rotation (II) orienté sensiblement perpendiculairement au plan de transport étant prévu sur l'ensemble de chariots (3), le râteau de transport (2) étant monté sur l'ensemble de chariots (3) au moyen dudit au moins un levier (4), la première unité d'entraînement (50) étant reliée par entraînement à l'ensemble de chariots (3) au moyen d'un premier moyen de transmission de force (7) fermé sur lui-même et un mouvement de coulissement de l'ensemble de chariots (3) pouvant être produit au moyen de la première unité d'entraînement (50), et la deuxième unité d'entraînement (51) étant reliée par entraînement audit au moins un levier (4) au moyen d'un deuxième moyen de transmission de force (8) fermé sur lui-même et un mouvement de pivotement dudit au moins un levier (4) pouvant être produit au moyen de la deuxième unité d'entraînement (51),
le procédé comportant
une commande coordonnée sélective de la première unité d'entraînement (50) et de la deuxième unité d'entraînement (51), afin de produire un mouvement de déplacement de l'ensemble de chariots (3) avec le râteau de transport (2) dans la direction de transport et/ou un mouvement de plongée du râteau de transport.

8. Procédé selon la revendication 7, **caractérisé en ce qu'**au moyen d'une commande synchrone des unités d'entraînement (50, 51), un mouvement de déplacement de l'ensemble de chariots (3) avec le râteau de transport (2) dans la direction de transport (I) est produit et, au moyen d'une commande des unités d'entraînement (50, 51) avec un rapport de réduction pouvant être défini, un mouvement de plongée du râteau de transport (2) est produit.
